# EUROPÄISCHE PATENTANMELDUNG

(11) **EP 4 813 201 A1**
(43) Veröffentlichungstag der Anmeldung: **30.09.2026**
(21) Anmeldenummer: 25166140.1
(22) Anmeldetag: 25.03.2025
(51) Int. Cl.: A01J 25/11, A01J 25/06

(54) **KÄSEFERTIGUNGSVORRICHTUNG**

(71) Anmelder: Kalt Maschinenbau AG, 9604 Lütisburg (CH)
(72) Erfinder: EICHER, Yves, 8587 Oberaach (CH); VIDALE, Romeo, 8556 Wigoltingen (CH)
(74) Vertreter: Wenzel Nemetzade Warthmüller Patentanwälte Part mbB

(57) **Zusammenfassung**

Käsefertigungsvorrichtung (1), insbesondere zur Erzeugung und/oder zum Brennen von Käsebruch, mit einem Aufnahmebehälter (2) zur Aufnahme eines Behälterinhaltes für die Herstellung von Käse, mit einer außerhalb des Aufnahmebehälters (2) angeordneten Trennvorrichtung (3) zur Trennung von Käsebruch und Molke, wobei der Aufnahmebehälter (2) mindestens eine Abgabeöffnung (4) zum Ableiten eines Gemischs aus Molke und Käsebruch aus dem Aufnahmebehälter (2) zur Trennvorrichtung (3) und eine Rückführöffnung (5) zum Rückführen von Käsebruch aus der Trennvorrichtung (3) in den Aufnahmebehälter (2) aufweist.

## Beschreibung

Die vorliegende Erfindung betrifft eine Käsefertigungsvorrichtung, insbesondere zur Erzeugung und/oder zum Brennen von Käsebruch. Ebenso betrifft die vorliegende Erfindung einen Nachrüstsatz für eine Käsefertigungsvorrichtung. Außerdem betrifft die vorliegende Erfindung ein Verfahren zur Erzeugung und/oder zum Brennen von Käsebruch.

Bei der Herstellung vieler Käsesorten wird Dickete gerührt oder geschnitten, um Käsebruch zu erzeugen. Bei der Herstellung von sogenannten hoch gebrannten Käsesorten wird Käsebruch gebrannt, also erhitzt. Um zu vermeiden, dass sich der Käsebruch während des Brennens absetzt und verklumpt, wird der Käsebruch während des Brennens gerührt und/oder geschnitten. Verklumpter Käsebruch könnte die Käsequalität beeinträchtigen und/oder nicht zu Käse weiterverarbeitet werden und würde mithin zu Ausschuss führen.

Sich vom Käsebruch während des Rührens, Schneidens und/oder Brennens trennende Molke ist vom Käsebruch zu entfernen, wozu wiederum Molkeabsaugvorrichtungen anzuordnen sind. Derartige Molkeabsaugvorrichtungen können beispielsweise in der Käsefertigungsvorrichtung vorgesehen werden. Jedoch behindern diese den Betrieb von den Käsebruch rührenden und/oder schneidenden Rühr- oder Schneidwerken beziehungsweise erfordern viel Mechanik innerhalb des Lebensmittelbereichs.

Ferner kann durch Seitenventile an einem Käsefertiger die Molke abgesaugt und für die Molke-Vorlage hin zur jeweiligen Käsepresse geleitet werden. Dies ist für hoch gebrannte Käse jedoch nur bedingt geeignet. So kann für eine seitliche Absaugung von Molke aus einem Käsefertiger die Rührwerksdrehzahl reduziert werden, damit die Bruchdichte in den oberen Niveaus des Käsefertigers abnimmt und so bei der Molke-Vorlage nur noch wenig Bruch mitgefördert wird. Das unerwünschte Mitabsaugen von Käsebruch lässt sich auf diese Weise aber nicht mit ausreichend hoher Sicherheit verhindern.

Für bestimmte Käsesorten kann das Vorhandensein von Bruchstücken in der Molke-Vorlage, die der der jeweils nachgeordneten Käsepresse zugeleitet wird, ein Problem darstellen und die spätere Käsequalität beeinträchtigen.

Vor dem oben dargelegten Hintergrund bestand die Aufgabe der Erfindung darin, eine Käsefertigungsvorrichtung anzugeben, die eine effiziente Herstellung von Käsebruch ermöglicht und gleichzeitig bei eine Absaugung von Molke ermöglicht, bei der die Gefahr der Mitbeförderung von Bruchstücken vermieden oder verringert wird. Ebenso bestand die Aufgabe darin, einen Nachrüstsatz sowie ein Verfahren zur Erzeugung und/oder zum Brennen von Käsebruch anzugeben.

In Bezug auf eine Käsefertigungsvorrichtung ist diese Aufgabe durch den Gegentand von Anspruch 1 gelöst worden. In Bezug auf einen Nachrüstsatz für eine Käsefertigungsvorrichtung ist diese Aufgabe durch den Nachrüstsatz gemäß Anspruch 14 gelöst worden. In Bezug auf ein Verfahren zur Erzeugung und/oder zum Brennen von Käsebruch ist diese Aufgabe durch das Verfahren gemäß Anspruch 15 gelöst worden. Vorteilhafte Weiterbildungen sind in den jeweiligen Unteransprüchen angegeben und werden nachfolgend erläutert.

Eine erfindungsgemäße Käsefertigungsvorrichtung ist insbesondere eine Käsefertigungsvorrichtung zur Erzeugung und/oder zum Brennen von Käsebruch. Die Käsefertigungsvorrichtung weist einen Aufnahmebehälter zur Aufnahme eines Behälterinhaltes für die Herstellung von Käse auf. Die Käsefertigungsvorrichtung weist eine außerhalb des Aufnahmebehälters angeordneten Trennvorrichtung zur Trennung von Käsebruch und Molke auf. Der Aufnahmebehälter weist mindestens eine Abgabeöffnung zum Ableiten eines Gemischs aus Molke und Käsebruch aus dem Aufnahmebehälter zur Trennvorrichtung auf. Der Aufnahmebehälter weist mindestens eine Rückführöffnung zum Rückführen von Käsebruch aus der Trennvorrichtung in den Aufnahmebehälter auf.

Durch die Ableitung des Gemischs aus Molke und Käsebruch aus dem Aufnahmebehälters zu der außerhalb des Aufnahmebehälters angeordneten Trennvorrichtung sind Molke und Käsebruch außerhalb des Aufnahmebehälters voneinander trennbar. Eine innerhalb des Aufnahmebehälters und damit die Rühr- oder Schneidwerke behindernde Molkeabsaugvorrichtung kann auf diese Weise vermieden werden. Der Anteil mechanischer Baugruppen innerhalb des Aufnahmebehälters und damit innerhalb des Lebensmittelbereichs beziehungsweise Hygienebereichs kann auf diese Weise verringert werden. Gleichzeitig kann die Gefahr der unerwünschten Weiterbeförderung von Bruchstücken mit einer etwaigen Molke-Vorlage hin zu einer nachgeordneten Käsepresse verringert oder vermieden werden. Die Qualität des auf diese Weise hergestellten Käses lässt sich mithin verbessern. Insbesondere kann vermieden werden, dass in der Molke-Vorlage Käsebruchstücke die Qualität des späteren Käses negativ beeinflussen beziehungsweise Käsebruchstücke in der Molke-Vorlage aufgrund der längeren Reifedauer, im Vergleich zum später in die Käsepresse eingeleiteten Käsebruch, zu Inhomogenitäten im gereiften Käse führen.

Die Rückführung des abgetrennten Käsebruchs in den Aufnahmebehälter ermöglicht zudem ein weiteres Rühren, Schneiden und/oder Brennen des Bruchs und verringert damit nochmals die Gefahr der unerwünschten Weiterleitung zusammen mit der jeweiligen Molke-Vorlage.

Die weiteren erfindungsgemäßen Gegenstände, insbesondere die erfindungsgemäße Käsefertigungsvorrichtung, der erfindungsgemäße Nachrüstsatz und auch das erfindungsgemäße Verfahren, wie nachfolgend noch im Einzelnen beschrieben, können durch verschiedene, jeweils für sich vorteilhafte und, sofern nicht anders ausgeführt, beliebig miteinander kombinierbare Ausgestaltungen weiter verbessert werden. Auf die vorteilhaften Ausführungsformen und auch auf die mit ihnen verbundenen Vorteile wird im Folgenden näher eingegangen.

Die jeweiligen Einzelheiten und Vorteile betreffend die erfindungsgemäße Käsefertigungsvorrichtung, den erfindungsgemäßen Nachrüstsatz und auch das erfindungsgemäße Verfahren gelten gleichermaßen auch für die jeweils anderen erfindungsgemäßen Gegenstände beziehungsweise Kategorien.

Gemäß einer ersten Ausführungsform der Käsefertigungsvorrichtung kann die Käsefertigungsvorrichtung eine Heizeinrichtung zur Erwärmung eines in dem Aufnahmebehälter aufgenommenen Behälterinhaltes, insbesondere zum Brennen von Käsebruch in dem Aufnahmebehälter, aufweisen. Ein Vorteil einer solchen Ausführungsform kann sein, dass Käsebruch unter verbesserter Ausnutzung des Rohmaterials in einer Vorrichtung gerührt oder geschnitten und gebrannt werden kann, sodass das Rohmaterial nicht zwischen verschiedenen Vorrichtungen hin und her transportiert werden muss, was die Fertigungseffizient verbessert.

Gemäß einer weiteren Ausführungsform der Käsefertigungsvorrichtung kann die Käsefertigungsvorrichtung ein Rühr- und/oder Schneidwerk aufweisen. Das Rühr- und/oder Schneidwerk kann zumindest abschnittsweise im Aufnahmebehälter angeordnet sein. Das Rühr- und/oder Schneidwerk kann zum Rühren und/oder Schneiden eines in dem Aufnahmebehälter aufgenommenen Behälterinhaltes ausgebildet sein. Insbesondere kann das Rühr- und/oder Schneidwerk zum Rühren und/oder Schneiden und/oder Zerkleinern einer in dem Aufnahmebehälter aufgenommenen Dickete, insbesondere für das Erzeugen eines Käsebruchs, ausgebildet sein. Ein Vorteil einer solchen Ausführungsform kann sein, dass Käsebruch unter verbesserter Ausnutzung des Rohmaterials effizient von Molke getrennt werden kann, wobei das Rohmaterial nicht zwischen verschiedenen Vorrichtungen hin und her transportiert werden muss, was die Fertigungseffizient verbessert.

Gemäß einer weiteren Ausführungsform der Käsefertigungsvorrichtung kann das Rühr- und/oder Schneidwerk eine Käseharfe aufweisen. Ein Vorteil einer solchen Ausführungsform kann sein, dass mit einer solchen Käseharfe in kurzer Zeit viel Dickete oder Käsebruch geschnitten und/oder gerührt werden kann. Eine solche Käseharfe erreicht mit hoher Effizienz weite Teile des Aufnahmebehälters und sorgt damit für einen gründlichen Schneid- und/oder Rührprozess. Gleichzeitig wird aufgrund der extern angeordneten Trennvorrichtung der Betrieb der Käseharfe nicht beeinträchtigt.

Gemäß einer weiteren Ausführungsform der Käsefertigungsvorrichtung kann die Käsefertigungsvorrichtung eine zwischen der Abgabeöffnung und der Trennvorrichtung verlaufenden Gemischleitung zum Zuleiten eines Gemischs aus Molke und Käsebruch aus dem Aufnahmebehälter bis zur Trennvorrichtung aufweisen. Ein Vorteil einer solchen Ausführungsform kann sein, dass die Trennvorrichtung flexibel und Platz sparend positionierbar ist und eine sichere Zuleitung von Molke und Käsebruch zur Trennvorrichtung gewährleistet wird.

Gemäß einer weiteren Ausführungsform der Käsefertigungsvorrichtung kann die Käsefertigungsvorrichtung eine zwischen der Trennvorrichtung und der RückführÖffnung verlaufenden Rückführleitung zum Rückführen von Käsebruch aus der Trennvorrichtung in den Aufnahmebehälter aufweisen. Ein Vorteil einer solchen Ausführungsform kann sein, dass Käsebruch automatisiert und ohne manuellen Transport einfach wieder in den Aufnahmebehälter rückführbar ist.

Gemäß einer weiteren Ausführungsform der Käsefertigungsvorrichtung kann die Abgabeöffnung in einer Betriebsstellung der Käsefertigungsvorrichtung unterhalb der Rückführöffnung angeordnet sein. Ein Vorteil einer solchen Ausführungsform kann sein, dass ein einen besonders hohen Anteil an Käsebruch aufweisendes Gemisch aus dem Aufnahmebehälter mit nur geringem Aufwand entnehmbar ist. Zudem kann nach dem Trennen von Molke und Käsebruch sowie nach Rückführung Käsebruch in den Aufnahmebehälter die Konzentration von Käsebruch im Bereich der Abgabeöffnung hoch gehalten werden.

Gemäß einer weiteren Ausführungsform der Käsefertigungsvorrichtung kann die Trennvorrichtung eine Zufuhröffnung zum Zuführen eines Gemischs aus Molke und Käsebruch aus dem Aufnahmebehälter und/oder der Zuführleitung in die Trennvorrichtung aufweisen. Ein Vorteil einer solchen Ausführungsform kann sein, dass die Trennvorrichtung flexibel und Platz sparend positionierbar ist und eine sichere Zuführung von Gemisch in die Trennvorrichtung gewährleistet werden kann.

Gemäß einer weiteren Ausführungsform der Käsefertigungsvorrichtung kann die Trennvorrichtung eine Käsebruchabgabeöffnung zum Rückführen von Käsebruch aus der Trennvorrichtung in den Aufnahmebehälter aufweisen, insbesondere über die Rückführleitung. Ein Vorteil einer solchen Ausführungsform kann sein, dass die Trennvorrichtung flexibel und Platz sparend positionierbar ist und gleichzeitig ein sicheres Herausleiten von Käsebruch aus der Trennvorrichtung ermöglicht wird.

Gemäß einer weiteren Ausführungsform der Käsefertigungsvorrichtung kann die Trennvorrichtung eine Molkeabgabeöffnung aufweisen, insbesondere zum Herausleiten von gefilterter und/oder abgetrennter Molke aus der Trennvorrichtung heraus. Ein Vorteil einer solchen Ausführungsform kann sein, dass gefilterte Molke, insbesondere frei von Käsebruch, einer Käsepresse mit nur geringem Aufwand zugeleitet werden kann und damit eine verbesserte Käsequalität durch die nachfolgenden Produktionsschritte gewährleistet wird.

Gemäß einer weiteren Ausführungsform der Käsefertigungsvorrichtung kann die Molkeabgabeöffnung im Betrieb der Trennvorrichtung oberhalb der Käsebruchabgabeöffnung angeordnet sein. Ein Vorteil einer solchen Ausführungsform kann sein, dass die Molke mit geringem Aufwand vom Käsebruch entfernbar ist, da Käsebruch in der Regel in Molke absinkt.

Gemäß einer weiteren Ausführungsform der Käsefertigungsvorrichtung kann die Molkeabgabeöffnung im Betrieb der Trennvorrichtung oberhalb Zufuhröffnung angeordnet ist. Ein Vorteil einer solchen Ausführungsform kann sein, dass Molke aufgrund der im Vergleich zu Käsebruch in der Regel geringeren Dichte einfach abgebbar ist beziehungsweise die Trennung von Molke und Bruch aus dem in die Trennvorrichtung geleiteten Gemisch begünstigt wird.

Gemäß einer weiteren Ausführungsform der Käsefertigungsvorrichtung kann die Molkeabgabeöffnung im Betrieb der Trennvorrichtung in einer Vertikalrichtung zwischen der Zufuhröffnung und der Käsebruchabgabeöffnung angeordnet sein. Alternativ kann die Zufuhröffnung in einer Vertikalrichtung zwischen der Molkeabgabeöffnung und der Käsebruchabgabeöffnung angeordnet sein. Ein Vorteil einer solchen Ausführungsform kann sein, dass die entlang der Vertikalrichtung wirkende Schwerkraft den Transport von Gemisch in den Aufnahmebehälter und/oder den Abtransport von Molke und/oder Käsebruch aus dem Aufnahmebehälter zumindest unterstützt. Das Fließverhalten durch die jeweiligen Öffnungen kann durch einen solchen vertikalen Versatz auch mit geringen gegenseitigen Beeinträchtigungen erfolgen.

Gemäß einer weiteren Ausführungsform der Käsefertigungsvorrichtung kann der Aufnahmebehälter eine Mehrzahl von Abgabeöffnungen, insbesondere zum Ableiten eines Gemischs aus Molke und Käsebruch, aufweisen. Ein Vorteil einer solchen Ausführungsform kann sein, dass mehr Gemisch und gezielt Gemisch aus unterschiedlichen Bereichen des Aufnahmebehälters ableitbar ist.

Gemäß einer weiteren Ausführungsform der Käsefertigungsvorrichtung kann die zumindest eine Abgabeöffnung oder zumindest eine der Abgabeöffnungen in einem Behälterboden des Aufnahmebehälters ausgebildet sein. Ein Vorteil einer solchen Ausführungsform kann sein, dass Gemisch mit einem möglichst hohen Käsebruchanteil abgebbar ist und/oder dass die Schwerkraft die Abgabe des Gemisches aufgrund des durch die Gemischsäule über der zumindest einen Abgabeöffnung oder der zumindest einen der Abgabeöffnungen erzeugten Drucks zumindest unterstützt.

Gemäß einer weiteren Ausführungsform der Käsefertigungsvorrichtung kann die zumindest eine Abgabeöffnung oder zumindest eine der Abgabeöffnungen in einer Behälterseitenwand des Aufnahmebehälters ausgebildet sein. Beispielsweise können mehrere Abgabeöffnungen an unterschiedlichen Höhenpositionen einer Behälterseitenwand des Aufnahmebehälters ausgebildet sein. Ein Vorteil einer solchen Ausführungsform kann sein, dass mehr Gemisch und/oder gezielt Gemisch aus unterschiedlichen Bereichen des Aufnahmebehälters, gegebenenfalls mit unterschiedlichen Bruchkonzentrationen, ableitbar ist.

Gemäß einer weiteren Ausführungsform der Käsefertigungsvorrichtung kann jede der Abgabeöffnungen mit einer separaten Gemischleitung oder einem separaten Gemischleitungsabschnitt verbunden sein. Ein Vorteil einer solchen Ausführungsform kann sein, dass die Abgabe von Gemisch durch eine der Abgabeöffnungen wenn überhaupt nur geringfügig durch die Abgabe von Gemisch durch eine andere der Abgabeöffnungen beeinträchtigt wird.

Gemäß einer weiteren Ausführungsform der Käsefertigungsvorrichtung kann der Abgabeöffnung und/oder der Gemischleitung ein Gemischabgabeventil zugeordnet sein. Alternativ oder zusätzlich kann jeder Abgabeöffnung und/oder jeder Gemischleitung oder jedem Gemischleitungsabschnitt jeweils ein Gemischabgabeventil zugeordnet sein. Ein Vorteil einer solchen Ausführungsform kann sein, dass Gemisch gezielt über die gewünschte Abgabeöffnung abgebbar ist.

Gemäß einer weiteren Ausführungsform der Käsefertigungsvorrichtung kann die Käsefertigungsvorrichtung wenigstens eine Gemischpumpe aufweisen. Die Gemischpumpe kann ausgebildet und/oder angeordnet sein, um ein Gemisch aus Molke und Käsebruch aus dem Aufnahmebehälter zur Trennvorrichtung zu pumpen. Die Gemischpumpe kann eingangsseitig mit zumindest einer Abgabeöffnung und/oder einer Gemischleitung und/oder einem Gemischabgabeventil Gemisch leitend verbunden sein. Ein Vorteil einer solchen Ausführungsform kann sein, dass Gemisch auch entgegen der Schwerkraft transportierbar ist.

Gemäß einer weiteren Ausführungsform der Käsefertigungsvorrichtung kann die Trennvorrichtung als Filtervorrichtung, beispielswiese als Spaltsieb, ausgebildet sein. Ein Vorteil einer solchen Ausführungsform kann sein, dass Molke und Käsebruch mit geringen Energiekosten durch Filtern und beispielswiese Sieben voneinander trennbar sind.

Gemäß einer weiteren Ausführungsform der Käsefertigungsvorrichtung kann die Trennvorrichtung als Fliehkraftabscheider, beispielswiese Hydrozyklon, ausgebildet sein. Ein Vorteil einer solchen Ausführungsform kann sein, dass mit einem einfachen konstruktiven Aufbau eine einstellbare Menge von Molke und Käsebruch voneinander trennbar sind.

Gemäß einer weiteren Ausführungsform der Käsefertigungsvorrichtung kann die Trennvorrichtung ein Molkeaufnahmevolumen und ein Käsebruchaufnahmevolumen aufweisen. Die Molkeabgabeöffnung kann sich zum Molkeaufnahmevolumen hin öffnen. Die Käsebruchabgabeöffnung kann sich zum Käsebruchaufnahmevolumen hin öffnen. Die Zufuhröffnung kann sich zum Käsebruchaufnahmevolumen hin öffnen. Ein Vorteil einer solchen Ausführungsform kann sein, dass flüssige Molke einfacher vom Käsebruchaufnahmevolumen in das Molkeaufnahmevolumen übergehen kann als der festere Käsebruch, wenn das Gemisch in das Käsebruchaufnahmevolumen geleitet wird.

Gemäß einer weiteren Ausführungsform der Käsefertigungsvorrichtung kann die Trennvorrichtung und/oder die Filtervorrichtung ein Filterelement aufweisen. Das Filterelement kann in Form eines Spaltsiebfilterelements ausgestaltet sein. Das Filterelement kann zwischen dem Molkeaufnahmevolumen und dem Käsebruchaufnahmevolumen angeordnet sein. Ein Vorteil einer solchen Ausführungsform kann sein, dass das Filterelement zwar einfach und kostengünstig herstellbar und/oder zu reinigen ist, Molke und Käsebruch jedoch effizient voneinander trennt.

Gemäß einer weiteren Ausführungsform der Käsefertigungsvorrichtung kann die Trennvorrichtung, beispielswiese die als Hydrozyklon ausgebildete Trennvorrichtung, einen hohlzylindrischen Abschnitt und einen trichterförmigen Abschnitt aufweisen. Der trichterförmige Abschnitt kann sich mit seiner breiteren Öffnung in Betriebsstellung bevorzugt unterhalb des hohlzylindrischen Abschnitts an diesen anschließen. Ein Vorteil einer solchen Ausführungsform kann sein, dass flüssige Molke durch eine Zyklonwirkung im trichterförmigen Abschnitt effizient vom dichteren und/oder festeren Käsebruch getrennt wird.

Gemäß einer weiteren Ausführungsform der Käsefertigungsvorrichtung kann die Zufuhröffnung in einer lateralen Seite des hohlzylindrischen Abschnitts angeordnet sein. Ein Vorteil einer solchen Ausführungsform kann sein, dass die Mischung, wenn diese mit einer für die Zyklonwirkung ausreichenden Geschwindigkeit in den hohlzylindrischen Abschnitt geleitet wird, die Zyklonwirkung hervorruft oder zumindest unterstützt, sodass ein zusätzlicher Antrieb, der das Gemisch in der als Hydrozyklon ausgebildeten Trennvorrichtung dreht, nicht nötig ist oder zumindest weniger Antriebsenergie benötigt.

Die Molkeabgabeöffnung kann in einer vom trichterförmigen Abschnitt weg weisenden Stirnfläche des hohlzylindrischen Abschnitts angeordnet sein. Alternativ kann die Molkeabgabeöffnung von der Stirnfläche beabstandet im hohlzylindrischen Abschnitt angeordnet sein. Ein Vorteil einer solchen Ausführungsform kann sein, dass die vom Käsebruch getrennte Molke durch die Zyklonwirkung durch die Molkeabgabeöffnung gedrückt wird, sodass eine separate Pumpe oder Fördereinrichtung, die die Molke aus der als Hydrozyklon ausgebildete Trennvorrichtung herauspumpt oder fördert, nicht nötig ist oder zumindest weniger Pumpenergie benötigt.

Die Käsebruchabgabeöffnung kann durch einen von dem hohlzylindrischen Abschnitt weg verlaufenden Hals des trichterförmigen Abschnitts ausgebildet sein. Ein Vorteil einer solchen Ausführungsform kann sein, dass der von der Molke getrennte Käsebruch zumindest unter Mithilfe der Schwerkraft durch die Käsebruchabgabeöffnung abgebbar ist.

Gemäß einer weiteren Ausführungsform der Käsefertigungsvorrichtung kann die Summe zumindest ausgewählter Normalvektoren der Zufuhröffnung wenigstens komponentenweise tangential zu einer Innenseite des hohlzylindrischen Abschnitts ausgerichtet sein. Gemäß einer weiteren Ausführungsform der Käsefertigungsvorrichtung kann eine Innenseite des hohlzylindrischen Abschnitts übergangslos oder stufenlos in die Zufuhröffnung übergehen. Ein Vorteil einer solchen Ausführungsform kann sein, dass das in die als Hydrozyklon ausgebildete Trennvorrichtung geleitete Gemisch effizient und beispielsweise unter Verringerung oder gar Vermeidung von ungewollten Strömungen eine Zyklonströmung erzeugt oder deren Erzeugen zumindest fördert oder unterstützt.

Gemäß einer weiteren Ausführungsform der Käsefertigungsvorrichtung kann die Trennvorrichtung einen Überlaufbehälter aufweisen. Beispielswiese kann die Trennvorrichtung einen im Betrieb oben offenen Überlaufbehälter aufweisen. Die Zufuhröffnung kann in den Überlaufbehälter münden. Die Molkeabgabeöffnung kann durch eine obere Öffnung des Überlaufbehälters ausgebildet sein.

Der Überlaufbehälter kann einen die obere Öffnung umlaufenden Rand aufweisen. Der Rand kann eine Länge von bis zu 1 m, bis zu 2 m, bis zu 3 m, bis zu 4 m oder bis zu 5 m aufweisen oder von mehr als 5 m aufweisen.

Ein Vorteil einer solchen Ausführungsform kann sein, dass die Trennvorrichtung besonders kostengünstig herstellbar, betreibbar und/oder reinigbar ist, wobei die Länge des Randes der oberen Öffnung, die auch als Überlauföffnung bezeichnet werden kann, die Menge an Gemisch, dessen Molke und Käsebruch in einer vorgegebenen Zeit getrennt werden, bestimmen können.

Gemäß einer weiteren Ausführungsform der Käsefertigungsvorrichtung kann der Überlaufbehälter eine Überlaufkante aufweisen. Die Überlaufkante kann eine höhenverstellbare Überlaufkante sein. Die Überlaufkante kann das Überlaufen von Molke erlauben und/oder zum Zurückhalten von Käsebruch ausgebildet und/oder angeordnet sein. Ein Vorteil einer solchen Ausführungsform kann sein, dass durch die Höhenverstellbarkeit der Überlaufkante die Verteilung des Käsebruchs entlang der Vertikalrichtung im Gemisch beim Ableiten der Molke berücksichtigt werden kann. Ebenso kann durch die Verstellbarkeit die Durchlaufmenge über die Überlaufkante gezielt gesteuert werden.

Gemäß einer weiteren Ausführungsform der Käsefertigungsvorrichtung kann die Überlaufkante an einer Trennwand ausgebildet sein. Die Trennwand kann den Überlaufbehälter in zumindest zwei Überlaufbehälterabschnitte unterteilen. Die Überlaufkante kann an einer Seitenwand des Überlaufbehälters ausgebildet sein. Die Seitenwand kann den Überlaufbehälter von einem Auffangbehälter trennen. Ein Vorteil einer solchen Ausführungsform kann sein, dass abgetrennte Molke gezielt zur Weiternutzung ableitbar ist.

Gemäß einer weiteren Ausführungsform der Käsefertigungsvorrichtung können die Überlaufbehälterabschnitte eine obere Öffnung mit einem umlaufenden Rand aufweisen. Der Rand kann eine Länge von bis zu 1 m, bis zu 2 m, bis zu 3 m, bis zu 4 m oder bis zu 5 m aufweisen oder von mehr als 5 m aufweisen. Ein Vorteil einer solchen Ausführungsform kann sein, dass durch einen verhältnismäßig langen Rand eine hohe Menge an Gemisch von Molke und Käsebruch in einer vorgegebenen Zeit getrennt werden kann.

Gemäß einer weiteren Ausführungsform der Käsefertigungsvorrichtung kann die Käsefertigungsvorrichtung eine Verbindungsleitung aufweisen. Die Verbindungsleitung kann fluid leitend zu einer Weiterverabeitungsvorrichtung und/oder einer Käsepresse führen. Die Verbindungsleitung kann mit dem Aufnahmebehälter und/oder der Trennvorrichtung fluid leitend verbunden und/oder verbindbar sein. Ein Vorteil einer solchen Ausführungsform kann sein, dass Gemisch oder getrennter Käsebruch oder getrennte Molke effizient und ohne manuellen Transport zu einer Weiterverabeitungsvorrichtung und/oder einer Käsepresse leitbar ist.

Gemäß einer weiteren Ausführungsform der Käsefertigungsvorrichtung kann die Käsefertigungsvorrichtung eine mit der Molkeabgabeöffnung der Trennvorrichtung verbundene oder fluid leitend verbindbare Molkeabführleitung aufweisen. Alternativ oder zusätzlich kann die Käsefertigungsvorrichtung durch eine mit der Verbindungsleitung und/oder einer Weiterverabeitungsvorrichtung und/oder Käsepresse fluid leitend verbundenen und/oder verbindbaren Molkeabführleitung aufweisen. Ein Vorteil einer solchen Ausführungsform kann sein, dass abgetrennte Molke effizient der weiteren Verarbeitung zuführbar ist.

Gemäß einer weiteren Ausführungsform der Käsefertigungsvorrichtung kann zwischen der Zufuhrleitung und der Zufuhröffnung eine Dreiwegeventileinrichtung vorgesehen sein. Mit der Dreiwegeventileinrichtung kann wahlweise ein Gemisch aus Molke und Käsebruch einerseits zur Zufuhröffnung der Trennvorrichtung oder andererseits zur Verbindungsleitung leitbar sein. Ein Vorteil einer solchen Ausführungsform kann sein, dass insbesondere bei einer Inbetriebnahme oder einer Au-ßerbetriebnahme sowie bei einem Wechsel von einem Rohmaterial zu einem anderen Rohmaterial das Rohmaterial oder Gemisch oder fertig gebrannter Käsebruch einfach aus der Käsefertigungsvorrichtung ableitbar ist. Zudem kann über eine solche Dreiwegeventileinrichtung einfach zwischen einer Ableitung von Molke und Käsebruch zu einer Trennvorrichtung einerseits und einer Weiterverarbeitungsvorrichtung anderseits umgeschaltet werden.

Gemäß einer weiteren Ausführungsform der Käsefertigungsvorrichtung kann die Dreiwegeventileinrichtung ein Filterventil, das zwischen der Zufuhrleitung und der Zufuhröffnung angeordnet ist, und/oder ein Ableitungsventil, das zwischen der Zufuhrleitung und der Verbindungsleitung angeordnet ist, aufweisen. Ein Vorteil einer solchen Ausführungsform kann sein, dass Rohmaterial oder Gemisch oder fertig gebrannter Käsebruch einfach aus der Käsefertigungsvorrichtung ableitbar ist, insbesondere hin zur Trennvorrichtung oder hin zu einer Weiterverarbeitungsvorrichtung.

Gemäß einer weiteren Ausführungsform der Käsefertigungsvorrichtung kann die Dreiwegeventileinrichtung zwischen der Zufuhröffnung und einem Mündungsabschnitt, in dem die Molkeabführleitung in die Verbindungsleitung mündet, angeordnet sein. Ein Vorteil einer solchen Ausführungsform kann sein, dass Rohmaterial oder Gemisch oder fertig gebrannter Käsebruch einfach aus der Käsefertigungsvorrichtung ableitbar ist, insbesondere hin zur Trennvorrichtung oder hin zu einer Weiterverarbeitungsvorrichtung. Zudem ist eine solche Anordnung robust im Aufbau und erlaubt eine gute Zugänglichkeit der Dreiwegeventileinrichtung.

Gemäß einer weiteren Ausführungsform der Käsefertigungsvorrichtung kann sich die Molkeabführleitung durch eine Flüssigkeitspumpe und ein Flüssigkeitsventil erstrecken. Das Flüssigkeitsventil kann entlang der Molkeabführleitung näher an der Verbindungsleitung angeordnet sein als die Flüssigkeitspumpe. Die Flüssigkeitspumpe kann entlang der Molkeabführleitung näher an der Molkeabgabeöffnung angeordnet sein als das Flüssigkeitsventil. Ein Vorteil einer solchen Ausführungsform kann sein, dass Molke einfach und unter Vermeidung eines ungewollten Molkerückflusses in geeigneter Weise abführbar ist.

Gemäß einer weiteren Ausführungsform der Käsefertigungsvorrichtung kann die Gemischpumpe entlang der Zufuhrleitung der Dreiwegeventileinrichtung vorgeordnet sein. Ein Vorteil einer solchen Ausführungsform kann sein, dass Gemisch einfach und unter Vermeidung eines ungewollten Gemischrückflusses dem Dreiwegeventil zuführbar beziehungsweise mit hoher Betriebssicherheit aus dem Aufnahmebehälter herausleitbar ist.

Gemäß einer weiteren Ausführungsform der Käsefertigungsvorrichtung kann die Käsefertigungsvorrichtung eine Fördereinrichtung zur Förderung von Käsebruch aufweisen. Die Fördereinrichtung kann entlang der Rückführleitung und optional der Käsebruchabgabeöffnung nachgeordnet angeordnet sein. Ein Vorteil einer solchen Ausführungsform kann sein, dass Käsebruch mit einstellbarer Geschwindigkeit förderbar oder pumpbar ist und kontrolliert wieder in den Aufnahmebehälter zurückgeführt werden kann.

Ein weiterer Aspekt der vorliegenden Erfindung betrifft einen Nachrüstsatz für eine Käsefertigungsvorrichtung, beispielsweise für eine Käsefertigungsvorrichtung zur Erzeugung und/oder zum Brennen von Käsebruch und/oder eine erfindungsgemäße Käsefertigungsvorrichtung, mit einer außerhalb eines Aufnahmebehälters anordenbaren und/oder betreibbaren Trennvorrichtung zur Trennung von Käsebruch und Molke, mit einer Zuführleitung zur Zuführung eines Gemischs aus Molke und Käsebruch aus dem Aufnahmebehälter zur Trennvorrichtung, mit einer Rückführleitung zum Rückführen von Käsebruch aus der Trennvorrichtung in einen Aufnahmebehälter einer Käsefertigungsvorrichtung und mit einer Molkeabführleitung zum Herausleiten von gefilterter und/oder abgetrennter Molke aus der Trennvorrichtung heraus.

Durch den Nachrüstsatz kann eine bestehende Käsefertigungsvorrichtung, beispielsweise eine Käsefertigungsvorrichtung zur Erzeugung und/oder zum Brennen von Käsebruch, einfach und preisgünstig nachgerüstet werden, um Rohmaterial effizienter verwenden zu können, ohne dass das Innere der Käsefertigungsvorrichtung grundlegend umzubauen wäre. Gleichzeitig kann durch einen solchen Nachrüstsatz sichergestellt werden, dass Molke-Vorlage zu einer Weiterverarbeitungsvorrichtung, insbesondere Käsepresse, mit verringerter Gefahr der unerwünschten Mitbeförderung von Käsebruch geleitet werden kann. Die Käsequalität lässt sich hierdurch verbessern.

Gemäß einer ersten Ausführungsform des Nachrüstsatzes kann die Molkeabführleitung mit einer zu einer Weiterverarbeitungsvorrichtung und/oder Käsepresse führenden Verbindungsleitung verbindbar sein. Ein Vorteil einer solchen Ausführungsform kann sein, dass der Käsefertigungsvorrichtung einfach eine Weiterverarbeitungsvorrichtung und/oder Käsepresse nachordenbar ist.

Ein weiterer Aspekt der vorliegenden Erfindung betrifft ein Verfahren zur Erzeugung und/oder zum Brennen von Käsebruch. Das erfindungsgemäße Verfahren ist insbesondere ein Verfahren zur Erzeugung und/oder zum Brennen von Käsebruch, insbesondere mit einer Käsefertigungsvorrichtung nach einem der vorstehenden Ansprüche. Bei dem Verfahren wird in einem Aufnahmebehälter Milch dickgelegt. Bei dem Verfahren wir dickgelegte Milch in dem Aufnahmebehälter gerührt und/oder in Käsebruch zerkleinert. Bei dem Verfahren wird der Käsebruch in dem Aufnahmebehälter durch Erwärmung gebrannt. Bei dem Verfahren wird ferner ein Gemisch aus Molke und Käsebruch aus dem Aufnahmebehälter herausgeleitet. Bei dem Verfahren wird außerhalb des Aufnahmebehälters eine Trennung von Molke und Käsebruch des Gemisches vorgenommen. Bei dem Verfahren wird die abgetrennte und/oder gefilterte Molke zu einer Weiterverabeitungsvorrichtung und/oder Käsepresse geleitet und/oder der abgetrennte Käsebruch in den Aufnahmebehälter zurückgeführt.

Durch das Verfahren wird Rohmaterial effizienter verwendet, da innerhalb der Käsefertigungsvorrichtung angeordnete Werkzeuge nicht durch Filter oder Trennvorrichtungen behindert werden.

Gemäß einer ersten Ausführungsform des Verfahrens kann der Käsebruch nach der Rückführung in den Aufnahmebehälter erneut oder weiter erwärmt und/oder gerührt und/oder zerkleinert werden. Ein Vorteil einer solchen Ausführungsform kann sein, dass insbesondere hoch gebrannte Käsesorten effizient in nur einer Käsefertigungsvorrichtung erzeugt werden können. Gleichzeitig wird durch ein solches Verfahren sichergestellt, dass Molke-Vorlage zu einer Weiterverarbeitungsvorrichtung, insbesondere Käsepresse, mit verringerter Gefahr der unerwünschten Mitbeförderung von Käsebruch geleitet werden kann. Die Käsequalität lässt sich hierdurch verbessern.

Zum besseren Verständnis der vorliegenden Erfindung wird nachfolgend auf die Zeichnungen Bezug genommen. Diese zeigen schematisch lediglich Ausführungsbeispiele des Erfindungsgegenstands. Merkmale dieser Ausführungsbeispiele sind unabhängig voneinander kombinierbar.

In den Figuren und der dazugehörigen Beschreibung sind gleiche oder gleichwirkende Teile mit den gleichen Bezugszeichen versehen.

Es zeigen:
- Figur 1: eine schematische Perspektivansicht eines Ausführungsbeispiels einer erfindungsgemäßen Käsefertigungsvorrichtung,
- Figur 2: eine weitere schematische Perspektivansicht des Ausführungsbeispiels gemäß Figur 1,
- Figur 3: eine schematische Aufsicht des Ausführungsbeispiels gemäß der Figuren 1 und 2,
- Figur 4: eine weitere schematische Teilansicht eines weiteren Ausführungsbeispiels einer erfindungsgemäßen Käsefertigungsvorrichtung,
- Figur 5: eine schematische Darstellung des Ausführungsbeispiels gemäß der Figuren 1 bis 4,
- Figur 6: eine schematische Perspektivansicht eines weiteren Ausführungsbeispiels einer erfindungsgemäßen Käsefertigungsvorrichtung,
- Figur 7: eine weitere schematische Perspektivansicht des Ausführungsbeispiels gemäß der Figur 6,
- Figur 8: eine schematische Aufsicht des Ausführungsbeispiels gemäß der Figuren 6 und 7,
- Figur 9: eine schematische Darstellung des Ausführungsbeispiels der Figuren 6 bis 8,
- Figur 10: eine schematische Darstellung eines weiteren Ausführungsbeispiels einer erfindungsgemäßen Käsefertigungsvorrichtung und
- Figur 11: ein Ausführungsbeispiel eins erfindungsgemäßen Verfahrens als ein Flussdiagramm.

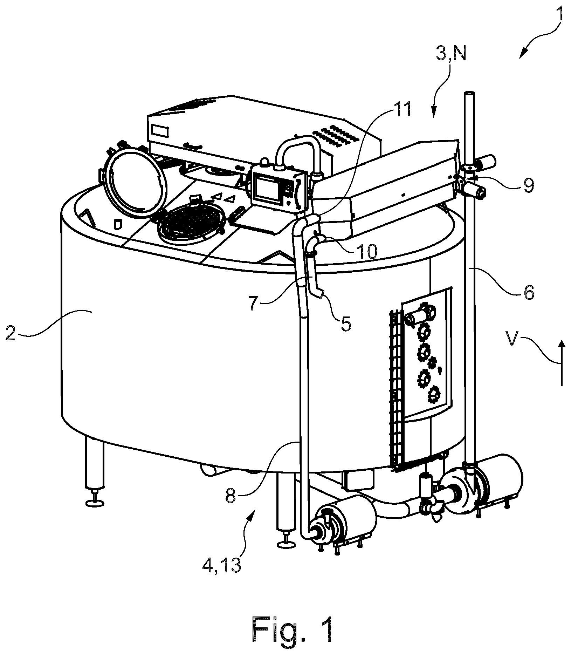

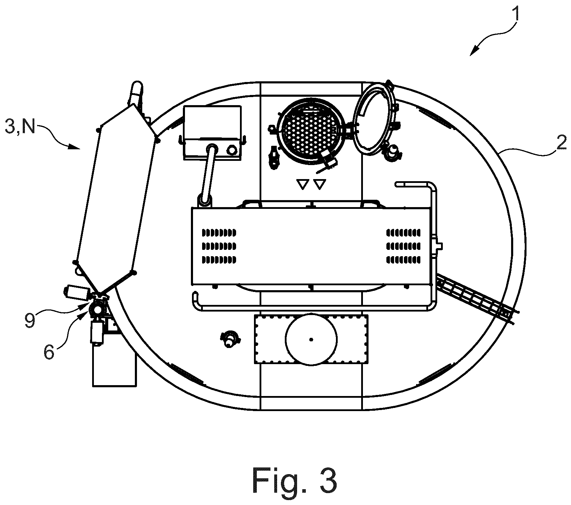

Figuren 1 bis 3 zeigen ein Ausführungsbeispiel einer Käsefertigungsvorrichtung 1, insbesondere zur Erzeugung und/oder zum Brennen von Käsebruch. Die Käsefertigungsvorrichtung 1 weist einen Aufnahmebehälter 2 zur Aufnahme eines Behälterinhaltes für die Herstellung von Käse auf. Die Käsefertigungsvorrichtung 1 weist ferner eine Trennvorrichtung 3 zur Trennung von Käsebruch und Molke auf. Die Trennvorrichtung 3 ist außerhalb des Aufnahmebehälters 2 angeordnet.

Der Aufnahmebehälter 2 weist mindestens eine Abgabeöffnung 4 zum Ableiten eines Gemischs aus Molke und Käsebruch aus dem Aufnahmebehälter 2 zur Trennvorrichtung 3 sowie auch eine Rückführöffnung 5 zum Rückführen von Käsebruch aus der Trennvorrichtung 3 in den Aufnahmebehälter 2 auf.

Die Abgabeöffnung 4 kann in einer Betriebsstellung der Käsefertigungsvorrichtung 1 unterhalb der Rückführöffnung 5 angeordnet sein.

Die Trennvorrichtung 3 kann als ein Teil eines Nachrüstsatzes N für eine Käsefertigungsvorrichtung 1, insbesondere für eine Käsefertigungsvorrichtung 1 zur Erzeugung und/oder zum Brennen von Käsebruch bereitgestellt sein. Die Trennvorrichtung 3 zur Trennung von Käsebruch und Molke des Nachrüstsatzes N ist ausgebildet, um außerhalb des Aufnahmebehälters 2 anordenbar und/oder betreibbar zu sein.

Der Nachrüstsatz N kann eine Zuführleitung 6 zur Zuführung eines Gemischs aus Molke und Käsebruch aus dem Aufnahmebehälter 2 zur Trennvorrichtung 3 aufweisen. Der Nachrüstsatz N kann ferner eine Rückführleitung 7 zum Rückführen von Käsebruch aus der Trennvorrichtung 3 in den Aufnahmebehälter 2 der Käsefertigungsvorrichtung 1 aufweisen. Der Nachrüstsatz N kann ferner eine Molkeabführleitung 8 zum Herausleiten von gefilterter und/oder abgetrennter Molke aus der Trennvorrichtung 3 heraus aufweisen.

Die Käsefertigungsvorrichtung 1 kann neben der Trennvorrichtung 3 die Zuführleitung 6, die Rückführleitung 7 und/oder die Molkeabführleitung 8 aufweisen.

Die Käsefertigungsvorrichtung 1 kann eine zwischen der Abgabeöffnung 4 und der Trennvorrichtung 3 verlaufende Gemischleitung zum Zuleiten eines Gemischs aus Molke und Käsebruch aus dem Aufnahmebehälter 2 bis zur Trennvorrichtung 3 aufweisen. Die Gemischleitung der Käsefertigungsvorrichtung 1 kann der Zuführleitung 6 des Nachrüstsatzes N entsprechen.

Die Käsefertigungsvorrichtung 1 kann eine zwischen der Trennvorrichtung 3 und der Rückführöffnung 5 verlaufenden Rückführleitung zum Rückführen von Käsebruch aus der Trennvorrichtung 3 in den Aufnahmebehälter 2 aufweisen. Die Rückführleitung der Käsefertigungsvorrichtung 1 kann der Rückführleitung 7 des Nachrüstsatzes N entsprechen.

Die Trennvorrichtung 3 kann eine Zufuhröffnung 9 zum Zuführen eines Gemischs aus Molke und Käsebruch aus dem Aufnahmebehälter 2 und/oder der Zuführleitung 6 in die Trennvorrichtung 3 aufweisen.

Die Trennvorrichtung 3 kann eine Käsebruchabgabeöffnung 10 zum Rückführen von Käsebruch aus der Trennvorrichtung 3 in den Aufnahmebehälter 2 aufweisen, insbesondere über die Rückführleitung 7. Die Trennvorrichtung 3 kann eine Molkeabgabeöffnung 11 aufweisen, insbesondere zum Herausleiten von gefilterter und/oder abgetrennter Molke aus der Trennvorrichtung 3 heraus.

Die Molkeabgabeöffnung 11 kann in der Vertikalrichtung V zwischen der Zufuhröffnung 9 und der Käsebruchabgabeöffnung 10 angeordnet sein, wenn die Trennvorrichtung 3 im Betrieb ist oder wenn der Nachrüstsatz N montiert ist.

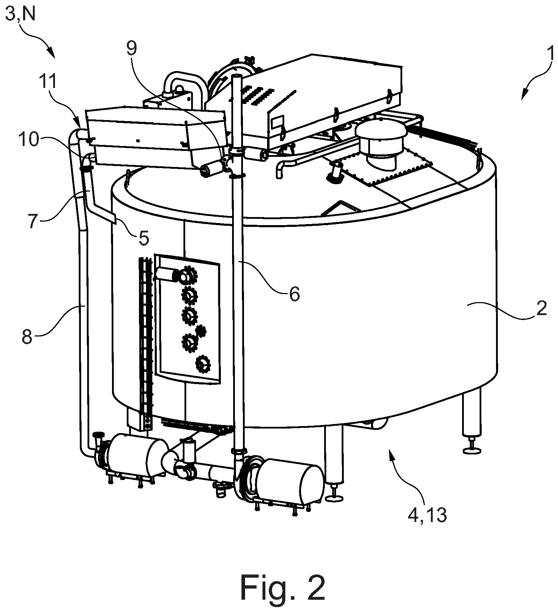

Ebenso kann die Zufuhröffnung 9 in der Vertikalrichtung V zwischen der Molkeabgabeöffnung 11 und der Käsebruchabgabeöffnung 10 angeordnet sein, wie beispielsweise in Figuren 1 und 2 gezeigt ist.

Im Betrieb der Trennvorrichtung 3 oder wenn der Nachrüstsatz N montiert ist, kann die Molkeabgabeöffnung 11 also oberhalb der Käsebruchabgabeöffnung 10 angeordnet sein. Zusätzlich oder alternativ kann die Molkeabgabeöffnung 11 oberhalb der Zufuhröffnung 9 angeordnet sein, wenn die Trennvorrichtung 3 im Betrieb ist oder wenn der Nachrüstsatz N montiert ist.

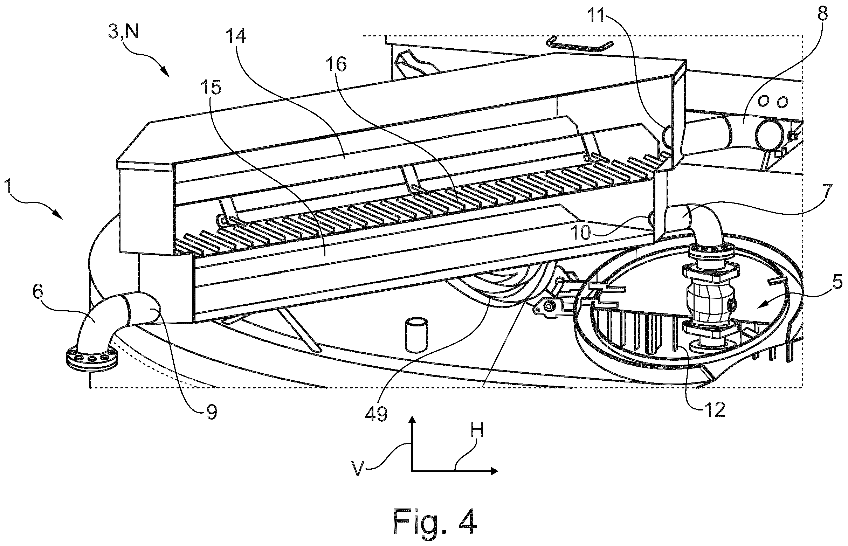

Figur 4 zeigt die Trennvorrichtung 3 ferner in einer abgewandelten Anordnung, in der die Rückführleitung 7 in eine obere Öffnung des Aufnahmebehälters 2 führt, wobei die obere Öffnung als Rückführöffnung 5 dient. Hier kann die Zufuhröffnung 9 unterhalb der Käsebruchabgabeöffnung 10 und/oder der Molkeabgabeöffnung 11, also in der Vertikalrichtung V vor der Käsebruchabgabeöffnung 10 und/oder der Molkeabgabeöffnung 11 angeordnet sein. Die Trennvorrichtung 3 kann gemäß der Ausführungsform in Figur 4 temporär in der in Figur 4 gezeigten Stellung angeordnet werden, insbesondere nur zur Durchführung des jeweiligen Trennvorgangs von Molke und Käsebruch. So kann die Die Trennvorrichtung 3 aus der in Figur 4 gezeigten Stellung wieder wegbewegt werden, beispielsweise um die obere Öffnung durch den gezeigten Deckel 49 zu verschließen.

Die Käsefertigungsvorrichtung 1 kann ein Rühr- und/oder Schneidwerk 12 aufweisen, das zumindest abschnittsweise im Aufnahmebehälter 2 angeordnet ist und/oder zum Rühren und/oder Schneiden eines in dem Aufnahmebehälter 2 aufgenommenen Behälterinhaltes ausgebildet ist. Beispielswiese kann das Rühr- und/oder Schneidwerk 12 zum Rühren und/oder Schneiden und/oder Zerkleinern einer in dem Aufnahmebehälter aufgenommenen Dickete, insbesondere für das Erzeugen eines Käsebruchs, ausgebildet sein. Zum Beispiel kann das Rühr- und/oder Schneidwerk kann eine Käseharfe aufweisen. Die zumindest eine Abgabeöffnung 4 oder zumindest eine der Abgabeöffnungen 4 kann in einem Behälterboden 13 des Aufnahmebehälters 2 ausgebildet sein.

Die Trennvorrichtung 3 kann beispielsweise als Filtervorrichtung, zum Beispiel als Spaltsieb, ausgebildet sein. Die Trennvorrichtung 3 kann ein Molkeaufnahmevolumen 14 und ein Käsebruchaufnahmevolumen 15 aufweisen.

Die Molkeabgabeöffnung 11 kann sich zum Molkeaufnahmevolumen 14 hin öffnen Die Käsebruchabgabeöffnung 10 kann sich zum Käsebruchaufnahmevolumen15 hin öffnen. Die Zufuhröffnung 9 kann sich zum Käsebruchaufnahmevolumen 15 hin öffnen. Die Trennvorrichtung 3 und/oder die Filtervorrichtung kann ein Filterelement 16 aufweist, insbesondere in Form eines Spaltsiebfilterelements. Das Filterelement 16 kann zwischen dem Molkeaufnahmevolumen 14 und dem Käsebruchaufnahmevolumen 15 angeordnet sein.

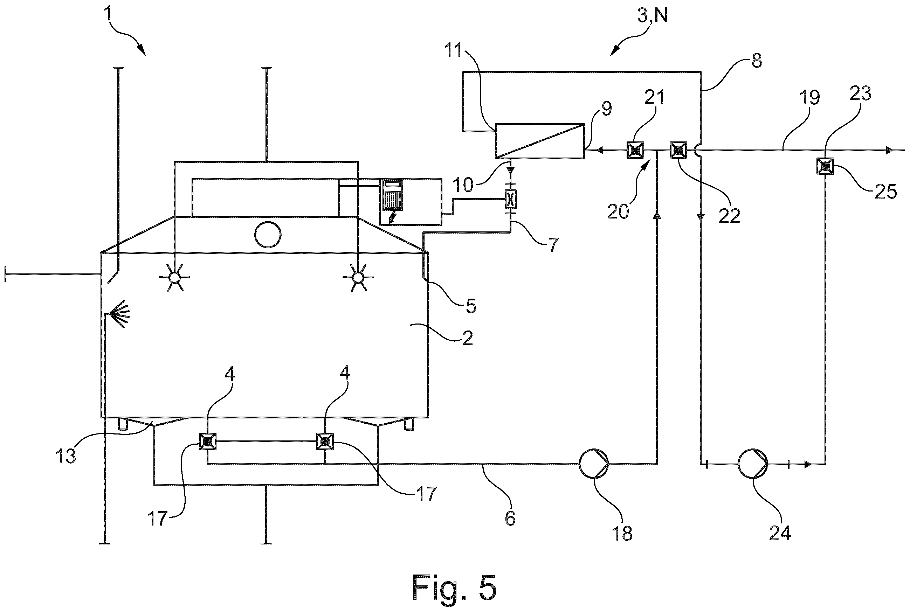

Figur 5 zeigt die Ausführungsbeispiele der bisherigen Figuren in einer schematischen Darstellung, insbesondere in Form einer Schaltplandarstellung.

Der Abgabeöffnung 4 und/oder der Gemischleitung kann ein Gemischabgabeventil 17 zugeordnet sein. Der Aufnahmebehälter 2 kann eine Mehrzahl von Abgabeöffnungen 4, insbesondere zum Ableiten eines Gemischs aus Molke und Käsebruch, aufweisen. Weist der Aufnahmebehälter mehrere und beispielsweise zwei Abgabeöffnungen 4 auf, kann jeder der Abgabeöffnung 4 jeweils ein Gemischabgabeventil 17 zugeordnet sein. Führt von jeder der mehreren Abgabeöffnungen 4 eine Gemischleitung weg, kann jeder der Gemischleitungen und zumindest jeweils einem Abschnitt der Gemischleitungen ein Gemischabgabeventil 17 zugeordnet sein.

Die Käsefertigungsvorrichtung 1 kann wenigstens eine Gemischpumpe 18 aufweisen. Die Gemischpumpe 18 kann ausgebildet und/oder angeordnet sein, um ein Gemisch aus Molke und Käsebruch aus dem Aufnahmebehälter 2 zur Trennvorrichtung 3 zu pumpen. Die Gemischpumpe 18 kann eingangsseitig mit zumindest einer Abgabeöffnung 4 und/oder einer Gemischleitung und/oder einem Gemischabgabeventil 17 Gemisch leitend verbunden sein.

Die Käsefertigungsvorrichtung 1 kann eine zu einer Weiterverabeitungsvorrichtung und/oder einer Käsepresse - hier nicht näher dargestellt - fluid leitend führende Verbindungsleitung 19, beispielswiese eine mit dem Aufnahmebehälter 2 und/oder der Trennvorrichtung 3 fluid leitend verbundene und/oder verbindbare Verbindungsleitung 19 aufweisen.

Die Molkeabführleitung 8 kann mit der Molkeabgabeöffnung 11 der Trennvorrichtung 3 verbunden oder fluid leitend verbindbar sein. Die Molkeabführleitung 8 kann mit der Verbindungsleitung 19 und/oder einer Weiterverabeitungsvorrichtung und/oder Käsepresse fluid leitend verbunden und/oder verbindbar sein. Die Molkeabführleitung 8 kann mit der zu einer Weiterverarbeitungsvorrichtung und/oder Käsepresse führenden Verbindungsleitung 19 verbindbar ist.

Zwischen der Zufuhrleitung 6 und der Zufuhröffnung 9 kann eine Dreiwegeventileinrichtung 20 vorgesehen sein. Mit der Dreiwegeventileinrichtung 20 kann wahlweise ein Gemisch aus Molke und Käsebruch zur Zufuhröffnung 9 der Trennvorrichtung 2 oder zur Verbindungsleitung 19 leitbar sein.

Die Dreiwegeventileinrichtung 20 kann ein Filterventil 21, das zwischen der Zufuhrleitung 6 und der Zufuhröffnung 9 angeordnet ist, aufweisen. Die Dreiwegeventileinrichtung 20 kann ferner ein Ableitungsventil 22, das zwischen der Zufuhrleitung 6 und der Verbindungsleitung 19 angeordnet ist, aufweisen. Die Dreiwegeventileinrichtung 20 kann ferner zwischen der Zufuhröffnung 9 und einem Mündungsabschnitt 23, in dem die Molkeabführleitung 8 in die Verbindungsleitung 19 mündet, angeordnet sein. Die Gemischpumpe 18 kann entlang der Zufuhrleitung 6 der Dreiwegeventileinrichtung 20 vorgeordnet sein.

Die Molkeabführleitung 8 kann sich durch eine Flüssigkeitspumpe 24 und ein Flüssigkeitsventil 25 erstrecken. Das Flüssigkeitsventil 25 kann entlang der Molkeabführleitung 8 näher an der Verbindungsleitung 19 angeordnet sein als die Flüssigkeitspumpe 24. Die Flüssigkeitspumpe 24 kann entlang der Molkeabführleitung 8 näher an der Molkeabgabeöffnung 11 angeordnet sein als das Flüssigkeitsventil 25.

Die Käsefertigungsvorrichtung 1 kann eine Heizeinrichtung zur Erwärmung eines in dem Aufnahmebehälter 2 aufgenommenen Behälterinhaltes, insbesondere zum Brennen von Käsebruch in dem Aufnahmebehälter 2, aufweisen. Die Heizeinrichtung - hier nicht näher dargestellt - kann außerhalb, zum Beispiel oberhalb oder seitlich eines Bereichs, in dem der Behälterinhalt gerührt und/oder geschnitten wird, angeordnet sein. Beispielsweise weist die Heizeinrichtung einen Heizstrahler oder eine Heizkontaktfläche auf.

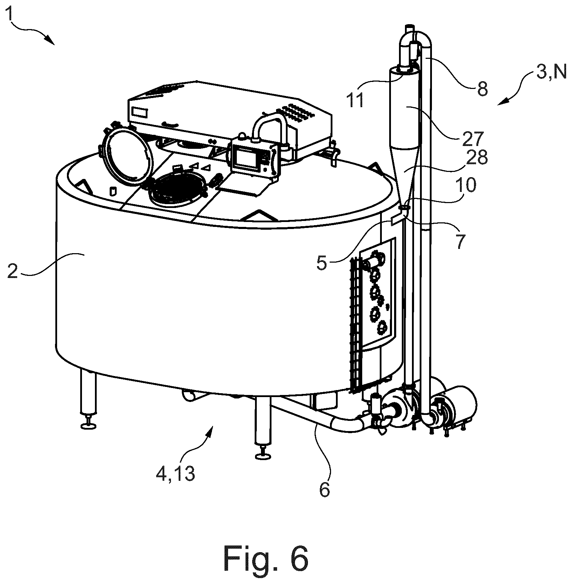

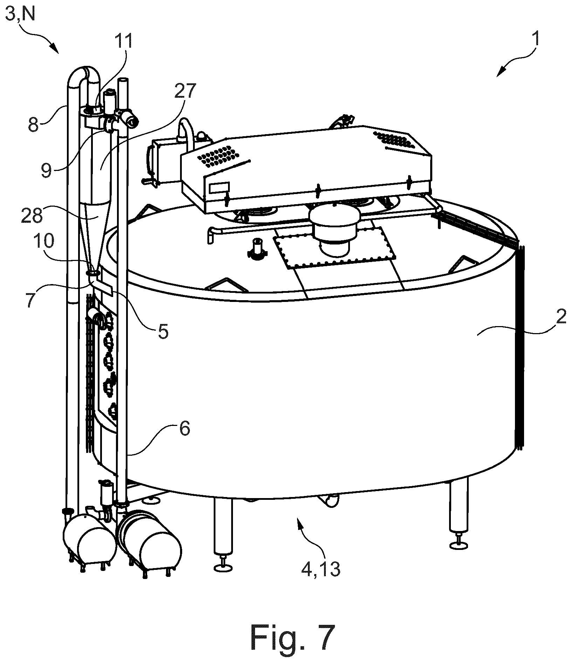

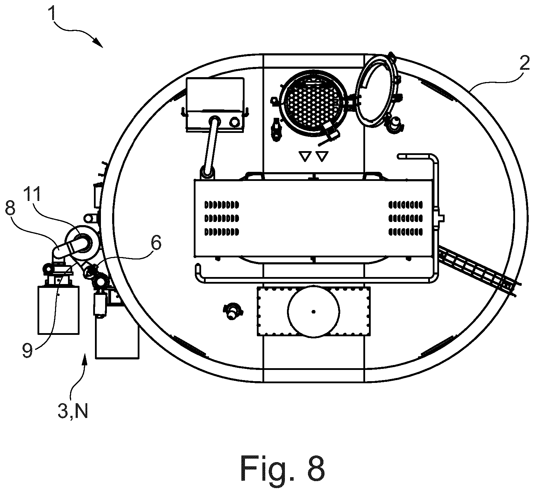

Figuren 6 bis 9 zeigen ein weiteres Ausführungsbeispiel der Käsefertigungsvorrichtung 1. Für Elemente, die in Form und/oder Funktion Elementen des Ausführungsbeispiels der Figuren 1 bis 5 entsprechen, sind im Folgenden dieselben Bezugszeichen verwendet. Im Folgenden wird auf die Unterschiede zum Ausführungsbeispiel der bisherigen Figuren eingegangen.

Insbesondere unterscheidet sich das Ausführungsbeispiel der Figuren 6 bis 9 dadurch vom Ausführungsbeispiel der vorherigen Figuren dadurch, dass die Trennvorrichtung 3 beispielhaft als Fliehkraftabscheider, insbesondere Hydrozyk-Ion, ausgebildet ist.

Die Trennvorrichtung 3, insbesondere die als Hydrozyklon ausgebildete Trennvorrichtung, kann einen hohlzylindrischen Abschnitt 27und einen trichterförmigen Abschnitt 28 aufweisen. Der trichterförmige Abschnitt 28 kann sich mit seiner breiteren Öffnung in Betriebsstellung bevorzugt unterhalb des hohlzylindrischen Abschnitts 27 an diesen anschließen.

Die Zufuhröffnung 9 kann an oder in einer lateralen Seite des hohlzylindrischen Abschnitts 27 angeordnet sein. Die Molkeabgabeöffnung 11 kann an oder in einer vom trichterförmigen Abschnitt 28 weg weisenden Stirnfläche des hohlzylindrischen Abschnitts 27 angeordnet sein. Die Molkeabgabeöffnung 11 kann alternativ von der Stirnfläche beabstandet im hohlzylindrischen Abschnitts 27 angeordnet sein. Die Käsebruchabgabeöffnung 10 kann durch einen von dem hohlzylindrischen Abschnitt 27 weg verlaufenden Hals des trichterförmigen Abschnitts 28 ausgebildet sein.

Die Summe zumindest ausgewählter Normalvektoren der Zufuhröffnung 9 kann wenigstens komponentenweise tangential zu einer Innenseite des hohlzylindrischen Abschnitts 27 ausgerichtet sein. Eine oder die Innenseite des hohlzylindrischen Abschnitts 27 kann übergangslos in die Zufuhröffnung 9 übergehen.

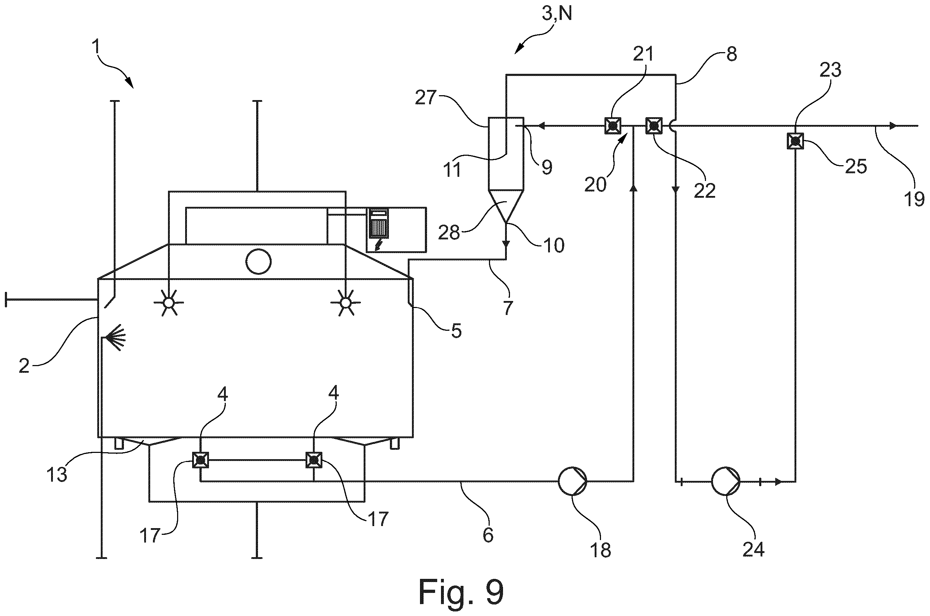

Figur 9 zeigt das Ausführungsbeispiel der Figuren 6 bis 8 in einer schematischen Darstellung, insbesondere in Form einer Schaltplandarstellung, und unterscheidet sich vom Ausführungsbeispiel der Figur 5 insbesondere dadurch, dass die Trennvorrichtung 3 als die Fliehkraftabscheider, insbesondere Hydrozyklon, ausgebildet ist.

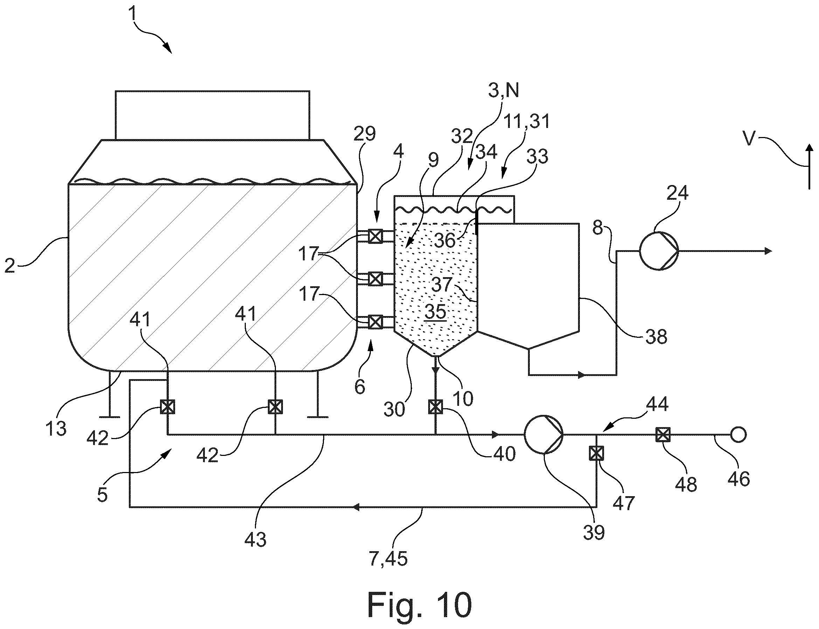

Figur 10 zeigt ein weiteres Ausführungsbeispiel der Käsefertigungsvorrichtung 1 beziehungsweise des Nachrüstsatzes N. Für Elemente, die in Form und/oder Funktion Elementen der vorherigen Ausführungsbeispiele entsprechen, sind im Folgenden dieselben Bezugszeichen verwendet. Im Folgenden wird auf die Unterschiede zu den bisherigen Ausführungsbeispielen eingegangen.

Wie in Figur 10 dargestellt, kann die zumindest eine Abgabeöffnung 4 oder zumindest eine der Abgabeöffnungen 4 in einer Behälterseitenwand 29 des Aufnahmebehälters 2 ausgebildet sein. Die Behälterseitenwand 29 kann eine laterale Seitenwand des Aufnahmebehälters 2 sein und sich beispielsweise vom Behälterboden 13 weg erstrecken. Weist der Aufnahmebehälter 2 mehrere Abgabeöffnungen 4 auf, können diese an unterschiedlichen Höhenpositionen an oder in der Behälterseitenwand 29 des Aufnahmebehälters 2 ausgebildet sein. Die Abgabeöffnungen 4 können also in der Vertikalrichtung V hintereinander angeordnet sein. Die Behälterseitenwand 29 kann sich im Wesentlichen entlang der Vertikalrichtung V erstrecken.

Jede der Abgabeöffnungen 4 kann mit einer separaten Gemischleitung 6 oder einem separaten Gemischleitungsabschnitt verbunden sein. Die Abgabeöffnungen 4 können also parallel zueinander geschaltet sein. Jede der Gemischleitungen 6 oder der Gemischleitungsabschnitte kann sich durch ein separates Gemischabgabeventil 17 erstrecken. Ist nur eine Abgabeöffnung 4 vorgesehen, die mit einer Gemischleitung 6 oder einem separaten Gemischleitungsabschnitt verbunden ist, kann sich die Gemischleitung 6 oder der Gemischleitungsabschnitte durch ein Gemischabgabeventil 17 erstrecken.

Die Trennvorrichtung 3 kann einen Überlaufbehälter 30 aufweisen. Im Betrieb oder im montierten Zustand des Nachrüstsatzes N kann der Überlaufbehälter 30 oben offen sein. Die Zufuhröffnung 9 oder die Mehrzahl an Zuführöffnungen 9 kann/können in dem Überlaufbehälter 30 münden. Die Molkeabgabeöffnung 11 kann durch eine obere Öffnung 31 des Überlaufbehälters 30 ausgebildet sein. Der Überlaufbehälter 30 kann einen die obere Öffnung 31 umlaufenden Rand 32 aufweisen. Der Rand 32 kann eine Länge von bis zu 1 m, bis zu 2 m, bis zu 3 m, bis zu 4 m oder bis zu 5 m oder von mehr als 5 m aufweisen.

Der Überlaufbehälter 30 kann eine Überlaufkante 33 aufweisen. Die Überlaufkante 33 kann höhenverstellbar und beispielsweise in und entgegen der Vertikalrichtung beziehungsweise Schwerkraftrichtung V verschiebbar sein. Die Überlaufkante 33 kann ausgebildet sein ein Überlaufen von Molke 34 und/oder ein Zurückhalten von Käsebruch 35 zu erlauben.

Die Überlaufkante 33 kann an einer Trennwand 36 ausgebildet sein, die den Überlaufbehälter 30 in zumindest zwei Überlaufbehälterabschnitte unterteilt. Die Überlaufkante 33 kann an einer Seitenwand 37 des Überlaufbehälters 30 ausgebildet ist, die den Überlaufbehälter 30 bevorzugt von einem Auffangbehälter 38 trennt. Die Seitenwand 37 kann dem Überlaufbehälter 30 und dem Auffangbehälter 38 gemeinsam sein.

Die Überlaufbehälterabschnitte können einen die obere Öffnung 31 umlaufenden Rand aufweisen. Der Rand kann eine Länge von bis zu 1 m, bis zu 2 m, bis zu 3 m, bis zu 4 m oder bis zu 5 m oder von mehr als 5 m aufweisen.

Die Molkeabgabeöffnung 11 kann in der Vertikalrichtung V oberhalb der Zufuhröffnung 9 und/oder der Käsebruchabgabeöffnung 10 angeordnet sein.

Die Käsefertigungsvorrichtung 1 kann eine Fördereinrichtung 39 zur Förderung von Käsebruch 35 entlang der Rückführleitung 7 aufweisen. Die Fördereinrichtung 39 kann der Käsebruchabgabeöffnung 10 nachgeordnet sein.

Der Käsebruchabgabeöffnung 10 kann fluid leitend mit einem Käsebruchventil 40 verbunden sein. Das Käsebruchventil 40 kann die Käsebruchabgabeöffnung 10 fluid leitend mit der Fördereinrichtung 39 verbinden. Die Fördereinrichtung 39 kann ausgebildet sein, durch die Käsebruchabgabeöffnung 10 von der Trennvorrichtung 3 abgegebenen Käsebruch 35 weg zu fördern.

Der Aufnahmebehälter 2 kann in seinem Behälterboden 13 wenigstens eine Ablassöffnung 41 aufweisen. Die Ablassöffnung 41 oder jeder der Ablassöffnungen 41 kann fluid leitend mit einem Ablassventil 42 verbunden sein. Das Ablassventil 42 oder die Ablassventile 42 kann die Ablassöffnung 41 oder die Ablassöffnungen 41 fluid leitend mit der Fördereinrichtung 39 verbinden. Die Fördereinrichtung 39 kann ausgebildet sein, durch die wenigstens eine Ablassöffnung 41 von dem Aufnahmebehälter 2 abgegebenes Gemisch weg zu fördern.

Das Ablassventil 42 oder die Ablassventile 42 und das Käsebruchventil 40 können durch eine gemeinsamen Leitung 43 mit der Fördereinrichtung 39 verbunden sein. Das Ablassventil 42 oder die Ablassventile 42 kann zwischen der Ablassöffnung 41 oder den Ablassöffnungen 41 und der gemeinsamen Leitung 43 angeordnet sein. Das Käsebruchventil 40 kann zwischen der Käsebruchabgabeöffnung 10 und der gemeinsamen Leitung 43 angeordnet sein.

Die Fördereinrichtung 39 kann eingangsseitig mit der Trennvorrichtung 3 und/oder dem Aufnahmebehälter 2 verbunden oder zumindest fluidleitend verbindbar zu sein. Ausgangsseitig kann der Fördereinrichtung 39 eine Verzweigungseinrichtung 44 nachgeordnet sein. Ein erster Zweig der Verzweigungseinrichtung 44 kann ein Rückführzweig 45 sein, der von der Fördereinrichtung 39 zum Aufnahmebehälter 2 führt und beispielswiese in einem Verbindungsstück, das eines der Ablassventile 42 mit der zugeordneten Ablassöffnung 41 verbindet, mündet. Der Rückführzweig 45 kann zumindest abschnittsweise der Rückführleitung 7 entsprechen.

Ein zweiter Zweig der Verzweigungseinrichtung 44 kann ein Abführzweig 46 sein, der von der Fördereinrichtung 39 weg führt, beispielsweise zu einer Weiterverarbeitungseinrichtung und/oder einer Käsepresse - hier nicht näher dargestellt. Der Abführzeig 46 kann der Verbindungsleitung 19 entsprechen. Die Verzweigungseinrichtung 44 kann auch als Dreiwegeventileinrichtung bezeichnet werden.

Der Rückführzweig 45 kann sich durch ein Rückführventil 47 erstrecken. Der Abführzweig 46 kann sich durch ein Abführventil 48 erstrecken. Eine von der Fördereinrichtung 39 abgewandte oder weg führende Seite des Abführventils 48 kann fluid leitend mit der Flüssigkeitspumpe 24 verbunden sein.

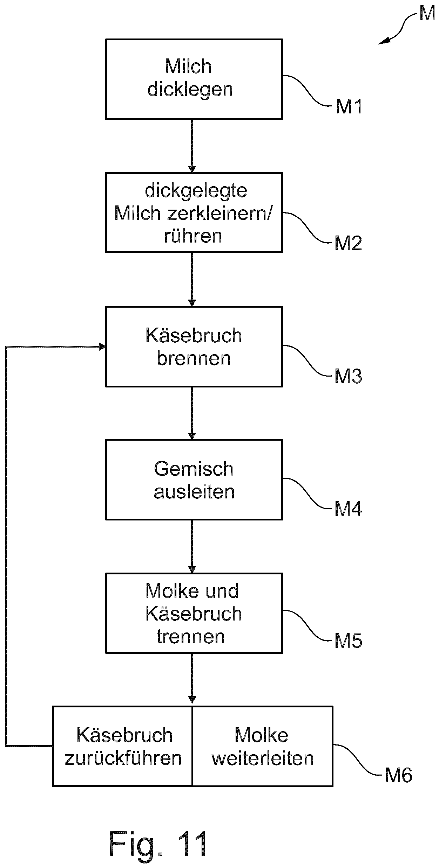

Figur 11 zeigt ein Ausführungsbeispiel eines Verfahrens zur Erzeugung und/oder zum Brennen von Käsebruch, insbesondere mit einer Käsefertigungsvorrichtung nach einem der vorstehenden Ausführungsbeispiele, schematisch als ein Flussdiagramm.

Bei dem Verfahren M wird Milch in einem ersten Verfahrensschritt M1 in einem Aufnahmebehälter 2 dickgelegt. In einem weiteren Verfahrensschritt M2 wird dickgelegte Milch in dem Aufnahmebehälter 2 in Käsebruch zerkleinert und/oder gerührt. In einem weiteren Verfahrensschritt M3 wird der Käsebruch in dem Aufnahmebehälter 2 durch Erwärmung gebrannt. In einem weiteren Verfahrensschritt M4 wird ein Gemisch aus Molke und Käsebruch aus dem Aufnahmebehälter 2 herausgeleitet. In einem weiteren Verfahrensschritt M5 wird außerhalb des Aufnahmebehälters eine Trennung von Molke und Käsebruch vorgenommen. In einem weiteren Verfahrensschritt M6 wird die abgetrennte und/oder gefilterte Molke zu einer Weiterverabeitungsvorrichtung und/oder Käsepresse geleitet, insbesondere als sogenannten Molke-Vorlage. Zusätzlich kann in Verfahrensschritt der abgetrennte Käsebruch in den Aufnahmebehälter zurückgeführt werden.

In einem weiteren Verfahrensschritt kann der Käsebruch nach der Rückführung in den Aufnahmebehälter 2 erneut oder weiter erwärmt und/oder gerührt und/oder zerkleinert werden.

In einem noch weiteren Verfahrensschritt kann, nachdem die Weiterverabeitungsvorrichtung und/oder Käsepresse ausreichend mit einer Molke-Vorlage befüllt worden ist, Käsebruch und/oder ein Gemisch aus Molke und Käsebruch aus dem Käsefertiger zur Weiterverabeitungsvorrichtung und/oder Käsepresse geleitet werden, um ein Pressen von Käsebruch vorzunehmen.

### BEZUGSZEICHENLSTE

- 1: Käsefertigungsvorrichtung
- 2: Aufnahmebehälter
- 3: Trennvorrichtung
- 4: Abgabeöffnung
- 5: Rückführöffnung
- 6: Zuführleitung / Gemischleitung
- 7: Rückführleitung
- 8: Molkeabführleitung
- 9: Zufuhröffnung
- 10: Käsebruchabgabeöffnung
- 11: Molkeabgabeöffnung
- 12: Rühr- / Schneidwerk
- 13: Behälterboden
- 14: Molkeaufnahmevolumen
- 15: Käsebruchaufnahmevolumen
- 16: Filterelement
- 17: Gemischabgabeventil
- 18: Gemischpumpe
- 19: Verbindungsleitung
- 20: Dreiwegeventileinrichtung
- 21: Filterventil
- 22: Ableitungsventil
- 23: Mündungsabschnitt
- 24: Flüssigkeitspumpe
- 25: Flüssigkeitsventil
- 27: hohlzylindrischer Abschnitt
- 28: trichterförmiger Abschnitt
- 29: Behälterseitenwand
- 30: Überlaufbehälter
- 31: obere Öffnung
- 32: Rand
- 33: Überlaufkante
- 34: Molke
- 35: Käsebruch
- 36: Trennwand
- 37: Seitenwand
- 38: Auffangbehälter
- 39: Fördereinrichtung
- 40: Käsebruchventil
- 41: Ablassöffnung
- 42: Ablassventil
- 43: gemeinsame Leitung
- 44: Verzweigungseinrichtung
- 45: Rückführzweig
- 46: Abführzweig
- 47: Rückführventil
- 48: Abführventil
- 49: Deckel

- H: Horizontalrichtung
- M: Verfahren
- M1: Milch dicklegen
- M2: dickgelegte Milch rühren / zerkleinern
- M3: Käsebruch brennen
- M4: Gemisch ausleiten
- M5: Molke von Käsebruch trennen
- M6: Molke weiterleiten / Käsebruch zurückführen
- N: Nachrüstsatz
- V: Vertikalrichtung

## Patentansprüche

1. Käsefertigungsvorrichtung (1), insbesondere zur Erzeugung und/oder zum Brennen von Käsebruch, mit einem Aufnahmebehälter (2) zur Aufnahme eines Behälterinhaltes für die Herstellung von Käse, mit einer außerhalb des Aufnahmebehälters (2) angeordneten Trennvorrichtung (3) zur Trennung von Käsebruch und Molke, wobei der Aufnahmebehälter (2) mindestens eine Abgabeöffnung (4) zum Ableiten eines Gemischs aus Molke und Käsebruch aus dem Aufnahmebehälter (2) zur Trennvorrichtung (3) und eine Rückführöffnung (5) zum Rückführen von Käsebruch aus der Trennvorrichtung (3) in den Aufnahmebehälter (2) aufweist.

2. Käsefertigungsvorrichtung (1) nach Anspruch 1, **gekennzeichnet durch** eine zwischen der Trennvorrichtung (3) und der Rückführöffnung (5) verlaufenden Rückführleitung (7) zum Rückführen von Käsebruch aus der Trennvorrichtung in den Aufnahmebehälter (2) und/oder dass die Abgabeöffnung (4) in einer Betriebsstellung der Käsefertigungsvorrichtung (1) unterhalb der Rückführöffnung (5) angeordnet ist und/oder dass die Trennvorrichtung (3) eine Zufuhröffnung (9) zum Zuführen eines Gemischs aus Molke und Käsebruch aus dem Aufnahmebehälter (2) und/oder der Zuführleitung (6) in die Trennvorrichtung (3) aufweist.

3. Käsefertigungsvorrichtung (1) nach einem der vorstehenden Ansprüche,
**dadurch gekennzeichnet, dass** die Trennvorrichtung (3) eine Käsebruchabgabeöffnung (10) zum Rückführen von Käsebruch aus der Trennvorrichtung (3) in den Aufnahmebehälter (2) aufweist, insbesondere über die Rückführleitung (7), und/oder dass die Trennvorrichtung (3) eine Molkeabgabeöffnung (11) aufweist, insbesondere zum Herausleiten von gefilterter und/oder abgetrennter Molke aus der Trennvorrichtung (3) heraus.

4. Käsefertigungsvorrichtung (1) nach Anspruch 3, **dadurch gekennzeichnet, dass** im Betrieb der Trennvorrichtung (3) die Molkeabgabeöffnung (11) oberhalb der Käsebruchabgabeöffnung (10) angeordnet ist.

5. Käsefertigungsvorrichtung (1) nach Anspruch 3 oder 4, **dadurch gekennzeichnet, dass** im Betrieb der Trennvorrichtung (3) die Molkeabgabeöffnung (11) in einer Vertikalrichtung (V) zwischen der Zufuhröffnung (9) und der Käsebruchabgabeöffnung (10) oder dass die Zufuhröffnung (9) in einer Vertikalrichtung (V) zwischen der Molkeabgabeöffnung (11) und der Käsebruchabgabeöffnung (10) angeordnet ist.

6. Käsefertigungsvorrichtung (1) einem der vorstehenden Ansprüche,
**dadurch gekennzeichnet, dass** die zumindest eine Abgabeöffnung (4) oder zumindest eine der Abgabeöffnungen (4) in einer Behälterseitenwand (29) des Aufnahmebehälters (2) ausgebildet ist, insbesondere mehrere Abgabeöffnungen (4) an unterschiedlichen Höhenpositionen einer Behälterseitenwand (29) des Aufnahmebehälters (29) ausgebildet sind.

7. Käsefertigungsvorrichtung (1) einem der vorstehenden Ansprüche,
**dadurch gekennzeichnet, dass** der Abgabeöffnung (4) und/oder der Gemischleitung (6) ein Gemischabgabeventil (17) zugeordnet ist und/oder dass jeder Abgabeöffnung (4) und/oder jeder Gemischleitung (6) oder jedem Gemischleitungsabschnitt jeweils ein Gemischabgabeventil (17) zugeordnet ist.

8. Käsefertigungsvorrichtung (1) nach einem der vorstehenden Ansprüche,
**gekennzeichnet durch** wenigstens eine Gemischpumpe (18), die ausgebildet und/oder angeordnet ist, um ein Gemisch aus Molke und Käsebruch aus dem Aufnahmebehälter (2) zur Trennvorrichtung (3) zu pumpen, wobei die Gemischpumpe (18) bevorzugt eingangsseitig mit zumindest einer Abgabeöffnung (4) und/oder einer Gemischleitung (6) und/oder einem Gemischabgabeventil (17) Gemisch leitend verbunden ist.

9. Käsefertigungsvorrichtung (1) nach einem der vorstehenden Ansprüche, **dadurch gekennzeichnet, dass** die Trennvorrichtung (3) als Filtervorrichtung, insbesondere als Spaltsieb, oder als Fliehkraftabscheider, insbesondere Hydrozyklon, ausgebildet ist.

10. Käsefertigungsvorrichtung (1) nach einem der vorstehenden Ansprüche, **dadurch gekennzeichnet, dass** die Trennvorrichtung (3), insbesondere die als Hydrozyklon ausgebildete Trennvorrichtung (3), einen hohlzylindrischen Abschnitt (27) und einen trichterförmigen Abschnitt (28) aufweist, wobei sich der trichterförmige Abschnitt (28) mit seiner breiteren Öffnung in Betriebsstellung bevorzugt unterhalb des hohlzylindrischen Abschnitts (27) an den hohlzylindrischen Abschnitts (27) anschließt.

11. Käsefertigungsvorrichtung (1) nach einem der vorstehenden Ansprüche, **dadurch gekennzeichnet, dass** die Trennvorrichtung (3) einen Überlaufbehälter (30) aufweist, insbesondere einen im Betrieb oben offenen Überlaufbehälter (30), wobei die Zufuhröffnung (9) in dem Überlaufbehälter (30) mündet und/oder wobei die Molkeabgabeöffnung (11) durch eine obere Öffnung (31) des Überlaufbehälters (30) ausgebildet ist, wobei der Überlaufbehälter (30) optional einen die obere Öffnung (31) umlaufenden Rand (32) aufweist, wobei der Rand (32) bevorzugt eine Länge von bis zu 1 m, bis zu 2 m, bis zu 3 m, bis zu 4 m oder bis zu 5 m aufweist oder von mehr als 5 m aufweist.

12. Käsefertigungsvorrichtung (1) nach Anspruch 11, **dadurch gekennzeichnet, dass** der Überlaufbehälter (30) eine Überlaufkante (33) aufweist, insbesondere eine höhenverstellbare Überlaufkante (33), die das Überlaufen von Molke erlaubt und/oder zum Zurückhalten von Käsebruch ausgebildet und/oder angeordnet ist und/oder dass die Überlaufkante (33) an einer Trennwand (36) ausgebildet ist, die den Überlaufbehälter (30) in zumindest zwei Überlaufbehälterabschnitte unterteilt, und/oder dass die Überlaufkante (33) an einer Seitenwand (36) des Überlaufbehälters (30) ausgebildet ist, die den Überlaufbehälter (30) bevorzugt von einem Auffangbehälter (38) trennt.

13. Käsefertigungsvorrichtung (1) nach Anspruch 12, **dadurch gekennzeichnet, dass** die Überlaufbehälterabschnitte eine obere Öffnung (31) mit einem umlaufenden Rand (32) aufweist, wobei der Rand (32) bevorzugt eine Länge von bis zu 1 m, bis zu 2 m, bis zu 3 m, bis zu 4 m oder bis zu 5 m aufweist oder von mehr als 5 m aufweist.

14. Nachrüstsatz (N) für eine Käsefertigungsvorrichtung (1), insbesondere für eine Käsefertigungsvorrichtung (1) zur Erzeugung und/oder zum Brennen von Käsebruch und/oder nach einem der Ansprüche 1 bis 37, mit einer außerhalb eines Aufnahmebehälters (2) betreibbaren Trennvorrichtung (3) zur Trennung von Käsebruch und Molke, mit einer Zuführleitung (6) zur Zuführung eines Gemischs aus Molke und Käsebruch aus dem Aufnahmebehälter (2) zur Trennvorrichtung (3), mit einer Rückführleitung (7) zum Rückführen von Käsebruch aus der Trennvorrichtung (3) in einen Aufnahmebehälter (2) einer Käsefertigungsvorrichtung (1) und mit einer Molkeabführleitung (8) zum Herausleiten von gefilterter und/oder abgetrennter Molke aus der Trennvorrichtung (3) heraus.

15. Verfahren (M) zur Erzeugung und/oder zum Brennen von Käsebruch, insbesondere mit einer Käsefertigungsvorrichtung (1) nach einem der vorstehenden Ansprüche, bei dem in einem Aufnahmebehälter (2) Milch dickgelegt wird (M1), bei dem dickgelegte Milch in dem Aufnahmebehälter (2) gerührt und/oder in Käsebruch zerkleinert wird (M2), bei dem der Käsebruch in dem Aufnahmebehälter (2) durch Erwärmung gebrannt wird (M3), bei dem ein Gemisch aus Molke und Käsebruch aus dem Aufnahmebehälter (2) herausgeleitet wird (M4) und außerhalb des Aufnahmebehälters (2) eine Trennung von Molke und Käsebruch vorgenommen wird (M5), bei dem die abgetrennte und/oder gefilterte Molke zu einer Weiterverabeitungsvorrichtung und/oder Käsepresse geleitet und/oder der abgetrennte Käsebruch in den Aufnahmebehälter (2) zurückgeführt wird (M6).
